# EUROPEAN PATENT SPECIFICATION

(11) **EP 2 901 878 B1**
(45) Date of publication and mention of the grant of the patent: **23.11.2016**
(21) Application number: 15000266.5
(22) Date of filing: 29.01.2015
(51) Int. Cl.: A43B 5/04, B32B 25/10

(54) **A shoe made of a composite material**
Schuh aus einem Verbundwerkstoff
Chaussure constituée d'un matériau composite

(30) Priority: 31.01.2014 SI 201400038
(43) Date of publication of application: 05.08.2015
(73) Proprietor: Avsenek, Tomaz, 4240 Radovljica (SI)
(72) Inventor: Avsenek, Tomaz, 4240 Radovljica (SI); Rupnik, Gregor, 1352 Preserje (SI)
(74) Representative: Golmajer Zima, Marjanca

(56) References cited:
- US-A1- 2004 048 022
- US-A1- 2006 064 904

## Description

### Object of Invention

The object of the present invention is a shoe made of a composite material, especially a ski boot intended for ski jumps, alpine skiing and cross-country skiing in both diagonal and carving techniques, and further for a winter hiking boot or climbing boot etc.

### Technical Problem

The technical problem solved by the present invention is how to conceive such a shoe, especially for the above-indicated embodiments, that will join properties of composite materials: high specific strength that provides the shoe of the invention with stiffness, and stability at desired areas depending on the purpose of the shoe, for instance a ski jumping shoe or a cross-country skiing shoe, and without a detrimental effect on these two properties at desired areas on the shoe also flexibility in selected directions, for instance in the ankle or sole area.

### Prior Art

Shoes made of composite materials are known for their high specific strength which makes these shoes considerably lighter than other shoes of this type made of other materials, such as injection moulded plastics or leather. Flexibility at desired areas is achieved by replacing a stiff composite material at these areas by a more flexible material, such as leather or injection moulded plastic. If we wanted to achieve flexibility of a composite material, we would have to make it thinner to such an extent to reduce its strength below the needed strength that is defined by the occurrence of forces on the shoe while used: skiing of various types.

US 2006/064904 A1 discloses a ski boot which achieves a combination of stiffness and flexibility at different areas by overmolding a flexible plastics material over the stiff composite material in certain areas, and leaving the stiff composite material out altogether where the shoe should be more flexible.

US 2004/048022 A1 discloses a construction which sandwiches a layer of elastic material between layers of composite material to provide damping.

The object of the invention is therefore to do away with these opposing properties of composite materials to achieve sufficient stiffness in desired areas of the shoe and adequate flexibility in other areas.

### Solution to the Technical Problem

The described technical problem is solved by a shoe of the invention made of composite materials, wherein it allows fabrication of stiff areas where needed and at the same time of flexible areas at other desired areas.

The invention will be described in more detail in the continuation by way of an embodiment.

A shoe made of a composite material, especially a ski boot in variants for ski jumps, alpine skiing and cross-country skiing in both diagonal and carving techniques, further for a winter hiking boot or climbing boot etc., is formed of a shell for receiving a user's foot and of an enveloping part to envelop a user's ankle. Both parts are mutually connected either stiffly in a material-fit manner or by way of a hinge located at the ankle joint area.

The shell and the enveloping part are made of a composite material: fabric from various commercially available fibres and a binding resin. Since strength and stiffness on various areas of the shell and the enveloping part are required, these areas are composed of several layers of fabric, at least two. Stiffness and strength are herewith achieved.

The areas on the shell, especially at the sides in proximity to the opening section that allows easier putting-on, and on the enveloping part include an additional layer of an elastic material, preferably rubber, between each pair of a fabric layer. Both the selection of elasticity of the intermediate material and the thickness of this layer define the level of elasticity and flexibility of these areas.

The areas that are supposed to have better flexibility are empirically defined by the size and position on the shell and the enveloping part depending on the purpose of the shoe.

The edge of the intermediate elastic material may be visible and this property may be used for advertising purposes if the flexible material is in a colour that differs from the colour of the composite material.

It goes without saying that, by being acquainted with the above description and its embodiments, a person skilled in the art can design new embodiments, especially in terms of industrial design and depending on special needs, without circumventing the characteristics of the invention defined in the appended claims.

## Claims

1. A shoe made of a composite material, especially a ski boot for various purposes, and formed of a shell for receiving a user's foot and of an enveloping part to envelop a user's ankle, wherein both parts are mutually connected either stiffly in a material-fit manner or by way of a hinge located at the ankle joint area, and the shell and/or the enveloping part are made of a composite material comprising a fabric and a binding resin, various areas of the shell and the enveloping part being composed of several layers of fabric, **characterized in that** the areas on the shell where flexibility is desired, especially at the sides in proximity to the opening section, and on the enveloping part, include an additional layer of an elastic material, preferably rubber, between each pair of a fabric layer.

2. Shoe according to claim 1 **characterized in that** the elastic material is rubber.

3. Shoe according to claims 1 and 2 **characterized in that** the edge or a part of the edge of the elastic intermediate layer is visible.

## Patentansprüche

1. Schuh, der aus einem Verbundstoff hergestellt ist, insbesondere ein Skistiefel für verschiedene Zwecke, und aus einer Schale zur Aufnahme des Fußes eines Benutzers und aus einem einhüllenden Teil zum Einhüllen des Knöchels eines Benutzers gebildet ist, wobei beide Teile entweder starr stoffschlüssig oder mittels eines im Fußgelenkbereich angeordneten Scharniers miteinander verbunden sind und die Schale und/oder der umhüllende Teil aus einem Verbundstoff hergestellt sind, der ein Gewebe und ein Bindeharz umfasst, wobei verschiedene Bereiche der Schale und des umhüllenden Teils aus mehreren Gewebelagen bestehen, **dadurch gekennzeichnet, dass** die Bereiche an der Schale, in denen Flexibilität erwünscht ist, insbesondere an den Seiten in der Nähe des Öffnungsabschnitts und am einhüllenden Teil, eine zusätzliche Lage aus einem elastischen Material, vorzugsweise Kautschuk, zwischen jedem Gewebelagenpaar aufweisen.

2. Schuh nach Anspruch 1, **dadurch gekennzeichnet, dass** das elastische Material Kautschuk ist.

3. Schuh nach Ansprüchen 1 und 2, **dadurch gekennzeichnet, dass** der Rand oder ein Teil des Randes der elastischen Zwischenlage sichtbar ist.

## Revendications

1. Chaussure constituée d'un matériau composite, en particulier chaussure de ski pour divers usages, et composée d'une coque destinée à recevoir un pied d'un utilisateur et d'une partie enveloppante destinée à envelopper une cheville d'un utilisateur, les deux parties étant raccordées l'une à l'autre soit de manière rigide au moyen d'une liaison par adhérence, soit par l'intermédiaire d'une charnière située au niveau de la région de l'articulation de la cheville, et la coque et/ou la partie enveloppante étant constituées d'un matériau composite comprenant un tissu et une résine de liaison, diverses régions de la coque et de la partie enveloppante étant composées de plusieurs couches de tissu, **caractérisée en ce que** les régions sur la coque au niveau desquelles une souplesse est souhaitable, et, en particulier, au niveau des côtés à proximité de la section d'ouverture, et sur la partie enveloppante, comprennent une couche supplémentaire d'un matériau élastique, de préférence du caoutchouc, entre chaque paire de couches de tissu.

2. Chaussure selon la revendication 1, **caractérisée en ce que** le matériau élastique est le caoutchouc.

3. Chaussure selon les revendications 1 et 2, **caractérisée en ce que** le bord ou une partie du bord de la couche intermédiaire élastique est visible.
